# EUROPEAN PATENT SPECIFICATION

(11) **EP 3 792 509 B1**
(45) Date of publication and mention of the grant of the patent: **30.08.2023**
(21) Application number: 19306089.4
(22) Date of filing: 10.09.2019
(51) Int. Cl.: F16B 31/02, H01R 4/36, F16B 1/00

(54) **TORQUE-LIMITING NUT FOR A BREAK-OFF BOLT**
DREHMOMENTBEGRENZUNGSMUTTER FÜR EINEN ABREISSBOLZEN
ÉCROU DE LIMITATION DE COUPLE POUR UN BOULON DE COUPURE

(43) Date of publication of application: 17.03.2021
(73) Proprietor: Tyco Electronics SIMEL, 21220 Gevrey-Chambertin (FR)
(72) Inventor: DOSSMANN, Julien, 21220 Gevrey Chambertin (FR)
(74) Representative: Grünecker Patent- und Rechtsanwälte PartG mbB

(56) References cited:
- EP-A1- 3 388 696
- WO-A1-2014/000881
- AU-B1- 2011 202 893
- CN-A- 102 637 966
- GB-A- 2 406 626
- US-A- 5 228 250
- US-A1- 2015 226 248

## Description

The invention relates to a torque-limiting nut for a break-off bolt, especially for an electric connector, the torque-limiting nut comprising a thread section and a head section which are separated by a predetermined breaking area, wherein the thread section comprises an internal thread and the head section comprises at least one abutment shoulder extending further towards a radial inward direction than the internal thread, the at least one abutment shoulder being arranged adjoining to the predetermined breaking area.

Break-off bolts are often used for securing a conductor, such as a wire or cable within a connector or connecting two electrical conductors with one another, for example in medium or high-voltage technology. Break-off bolts are formed in such a way that excess length of the break-off bolts may be broken off, particularly due to tensile stress or a combination of tensile stress and shearing. Consequently, the bolt does not protrude beyond an outer surface of the connector after the installation. For achieving and maintaining an electrically well conducting contact, the break-off bolt needs to be screwed into the connector with a predetermined torque. The predetermined torque may be ensured by using a so-called torque wrench. However, torque wrenches are quite specific tools which are often not available on an installation site.

In CN 102 637 966 A an arrangement with a clamp constructed as a pipe piece of metal and at least one clamping screw for fastening an electrical conductor in the clamp is disclosed. The clamping screw has an actuating member composed of an upper part and a lower part, which can be screwed onto a contact part and is equipped with an internal thread and a contact surface for a tool.

A tamper proof anchor bolt assembly that includes a frangible nut assembly and a tamper resistant skirt attached to one end of an expendable anchor bolt device is shown. The frangible nut includes a frangible connection, which ruptures at a predetermined torque corresponding to a secure connection.

EP 3 388 696 A1 deals with a shearable screw for a wire connection assembly, which can be used for different diameters of stranded wires.

A breakaway nut assembly is described in US 2015/226248 A1. The breakaway nut assembly includes a breakaway nut affixed to a traditional nut used in roof bolt assemblies by means of a breakaway collar. Another breakaway nut is disclosed in US5228250A.

In AU 2011 292 893 B1 a cable connection system is shown. The cable connection system comprises a connector body, a fastener and an installation tool. The fastener is formed of an electrically conductive material and has a hollow fastener body defined by a substantially frangible fastener wall.

WO 2014/000881 A1 describes a shearable screw with a thread section for screwing the shearable screw into a terminal body, wherein the thread section has a thread with an asymmetrical thread profile at least in sections.

Therefore, it is an object of the invention to provide a device for an easy installation of the break-off bolt without having to use a specific tool, such as a torque wrench.

The invention solves the above-mentioned problem by providing a torque-limiting nut for the break-off bolt, the torque-limiting nut comprising a thread section and a head section which are separated by a predetermined breaking area, wherein the thread section comprises an internal thread and the head section comprises at least one abutment shoulder extending further towards a radial inward direction than the internal thread, the at least one abutment shoulder being arranged adjoining to the predetermined breaking area, wherein the thread section tapers out towards the distal end.

With the inventive solution, a thread section of the torque-limiting nut can be screwed onto the break-off bolt until the break-off bolt abuts the at least one abutment shoulder. The head section and the thread section are rigidly connected by the predetermined breaking area, so that the head section keeps the rotational position relative to the break-off bolt stationary. In other words, due to the head section the torque-limiting nut may be connected to the break-off bolt in a rotational rigid manner at least in a winding direction for installing the break-off bolt. Applying a torque to the torque-limiting nut may thus lead to the break-off bolt being rotated and consequently screwed into a connector. Once a predetermined torque is achieved, the nut may break at the predetermined breaking area allowing the head section to move further down the thread of the break-off bolt. Therefore, the torque is no longer transferred to the break-off bolt ensuring that the break-off bolt is installed with the predetermined torque. By having the at least one abutment shoulder adjoining to the predetermined breaking area, the head section may easily be removed from the break-off bolt, once the head section and the thread section are separated.

The invention can be further improved by the following features, which are independent from one another with respect to their respective technical effects and which can be combined arbitrarily, within the scope of the appended claims.

According to a first aspect of the invention, the thread section may be a hollow cylinder that extends along a longitudinal axis of the torque-limiting nut from the predetermined breaking area in a direction away from the head section. The thread section may particularly comprise the dimensions of a standardised nut, so that the thread section may easily be engaged by a tool, such as a wrench.

Preferably the head section may be solid, so that the head section does not comprise a cavity, which may partially receive the bolt. Consequently, the head section may be a cap that closes the torque-limiting nut. The removal of the head section may thus be facilitated as the break-off bolt is not received in the head section.

At the predetermined breaking area, the torque-limiting nut may preferably be hollow so that the material thickness at the predetermined breaking area may be reduced, reducing the torque necessary for breaking the torque-limiting nut at the predetermined breaking area. At the predetermined breaking area, the material thickness may be smaller than at the thread section, further ensuring that the torque-limiting nut may break at the predetermined breaking area.

The head section may preferably not comprise an internal thread, therefore ensuring that the head section may not be screwed onto the break-off bolt, further decreasing the effort for removing the head section from the break-off bolt after the torque-limiting nut is broken at the predetermined breaking area.

The predetermined breaking area may preferably not be provided with an internal thread, further ensuring an easy removal of the head section. The parts of the predetermined breaking area that remain at the head section after breaking are thus not engaged to the thread of the break-off bolt, so that the head section may be easily removed, without having to use a removal tool, such as a wrench for unscrewing the head section from the break-off bolt.

The predetermined breaking area may for example be formed as a constriction between the head section and the thread section, having a lower outer diameter than the head section and/or the thread section.

The outer diameter of the head section may be the lower or equal to the outer diameter of the thread section. The head section and the thread section may comprise a structurally identical outer shape, so that the head section and the thread section may be engaged simultaneously by the same tool. For example, the outer circumference of the head section and thread section may comprise a polygonal form such as a hexagon, which can be engaged by a standardised hex-wrench. However, the thread section may preferably be adapted to be singly engaged by the standardised tool, so that after breaking at the predetermined breaking area the thread section can be directly screwed down the break-off bolt without having to remove the head section and/or having to disengage the torque-limiting nut with the tool before engaging only the broken off thread section.

The internal thread of the thread section may extend from the predetermined breaking area away from the head section to a free end of the torque-limiting nut. The free end may abut the connector, and by having the thread extending to the free end it can be ensured that the external thread of the break-off bolt is engaged by the internal thread close to or at the interface between nut and connector. Consequently, after shearing off of the break-off bolt, it can be assured that the remaining part of the break-off bolt does not protrude out of a bore of the connector beyond an outer surface of the connector.

Preferably, the head section, the predetermined breaking area and the thread section may be formed integrally with one another as a monolithic component, thereby simplifying the manufacturing process of the torque-limiting nut. For example, the torque-limiting nut may be a steel nut, preferably a stainless steel nut.

According to a further advantageous embodiment, the head section may comprise a fixing mechanism for fixing the head section to the break-off bolt. The head section may, for example, comprise a stud, which extends from the head section towards the thread section. The stud may be adapted to be inserted into a cavity of the break-off bolt so that the head section can be fixed to the remaining part of the break-off bolt after breaking. Therefore, the head section may function as a cap closing the cavity of the break-off bolt and preventing dust or other particles from entering the cavity.

A break-off assembly for installing a conductor, such as a wire or cable, within a connector, may comprise a break-off bolt and an inventive torque-limiting nut.

The at least one abutment shoulder may abut a front face of the break-off bolt, so that a movement of the torque limiting nut before breaking at the predetermined breaking area down the break-off bolt may be prevented. As the break-off bolt abuts the at least one abutments shoulder directly next to the predetermined breaking area, the size of the torque-limiting feature, particularly the head section along the longitudinal axis can be minimized, resulting in material savings during the manufacturing of the torque-limiting nut.

The internal thread of the thread section may engage an external thread of the break-off bolt. As the relative position of the thread section and the break-off bolt is maintained stationary due to the at least one abutment shoulder of the head section abutting the front face of the break-off bolt, the internal thread of the thread section and the external thread of the break-off bolt may form a firm connection in the winding direction. The rotational movement of the thread section in a winding direction for screwing in the break-off bolt may be transferred to the break-off bolt, further screwing the break-off bolt into the connector. In this position the torque-limiting nut may function as a screw head.

The predetermined torque, i.e. the installation torque of the break-off bolt at which the torque-limiting nut breaks at the predetermined breaking area, may be higher than the torque necessary for breaking the break-off bolt, particularly at the interface between nut and connector. This may prevent that the remaining part of the break-off bolt may be pulled out of the bore due to the high force acting upon the break-off bolt. Therefore, it may be ensured that the remaining part of the break-off bolt does not protrude from the bore beyond the outer surface of the connector.

The break-off bolt may preferably not be provided with a predetermined area, thereby simplifying the break-off bolt and allowing for an easier and cost-efficient production.

The break-off bolt may be hollow, having a cavity that is opened towards the front face. The cavity may reduce the material thickness of the break-off bolt, making it easier to break or shear the break-off bolt. For reducing the occurrence of burs during breaking, the cavity may at least partially be provided with an internal thread. The internal thread may be arranged staggered to the external thread, so that the grooves of the internal thread and external threads run parallel to one another. Consequently, the material thickness of the break-off bolt may be further reduced at the grooves.

The cavity may be closed off by the head section. Especially, the cavity of the remaining part of the break-off bolt may be closed off by the head section, wherein the head section functions as a cap protecting the cavity from debris or other outer influences.

The torque-limiting nut may comprise a pedestal with a lower outer diameter than the remaining torque-limiting nut, particularly the thread section. The pedestal may extend from the thread section at a distal end distant from the predetermined breaking area along the longitudinal axis in a direction away from the predetermined breaking area. Therefore, the pedestal may be adapted to abut the connector, so that the thread section may easily be engaged by an installation tool, such as a wrench, and is not blocked by the connector.

The thread section tapers out towards the distal end, so that the distal end is adapted to abut the connector, particularly at a depression formed on an outer surface of the connector, the depression tapering towards the bore of the connector.

A connector assembly may comprise a connector having a hollow space for receiving a conductor and at least one bore extending from an outer surface of the connector to the hollow space. The connector assembly may further comprise at least one break-off assembly being installed in the at least one bore for establishing an electric connection between the conductor and the connector.

The connector may particularly be pipe-shaped and the conductor may be a wire and/or cable extending parallel to the pipe shaped connector. The break-off assembly may press the conductor radially towards an inner surface of the pipe shaped connector.

The head portion may be formed as a cap for closing off the cavity of the break-off bolt, particularly the remaining part of the break-off bolt after breakage. Therefore, the head portion may protect the remaining part from dust or other debris during use.

The head portion may particularly close off the at least one bore of the connector preventing any debris to fall into the hollow space of the connector which may influence the electrical connection between the conductor and the connector.

The head portion may be adapted to be fittingly inserted into the depression of the connector, wherein the outer surface of the head portion may be flush with the outer surface of the connector. The head portion may particularly be adapted to fill the depression and complete the outer surface of the connector.

The head portion may comprise at least one guiding protrusion protruding radially from a circumference of the remaining head portion. At least two guiding protrusions may be provided arranged diametrically to one another.

The at least one guiding protrusion may be arranged at a section along the circumference of the remaining head portion with the maximum material thickness.

In the following, the torque-limiting nut and the break-off assembly according to the invention are explained in greater detail with reference to the accompanying drawings, in which exemplary embodiments are shown.

In the figures, the same reference numerals are used for elements which correspond to one another in terms of their function and/or structure.

According to the description of the various aspects and embodiments, elements shown in the drawings can be omitted if the technical effects of those elements are not needed for a particular application, and *vice versa*: i.e., elements that are not shown or described with reference to the figures but are described above can be added if the technical effect of those particular elements is advantageous in a specific application.

In the figures:
- Fig. 1: shows a schematic front view of an exemplary embodiment of a torque-limiting nut according to the invention;
- Fig. 2: shows a schematic cut view of the inventive torque-limiting nut shown in Fig. 1;
- Fig. 3: shows a schematic front view of an exemplary embodiment of an inventive break-off assembly;
- Fig. 4: shows a schematic cut view of the break-off assembly shown in Fig. 3;
- Figs. 5 to 11: show schematic perspective views of different positions of the break-off assembly according to the invention during installation;
- Fig. 12: shows a schematic front view of a further exemplary embodiment of a torque-limiting nut according to the invention; and
- Fig. 13: shows a schematic perspective view of a connector assembly according to the invention.

In the following, the shorter words *"bolt"* and *"nut"* will be used instead of the word *"break-off bolt"* and *"torque-limiting nut",* respectively.

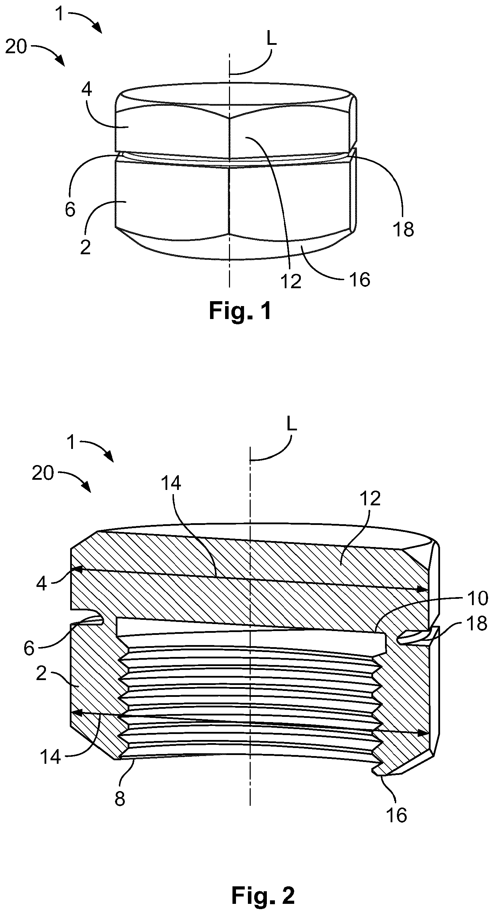

First, a first exemplary embodiment of a torque-limiting nut 1 according to the invention is elucidated with reference to Figs. 1 and 2.

The nut 1 comprises a thread section 2 and a head section 4, which are separated by a predetermined breaking area 6 along a longitudinal axis L of the nut 1. The thread section 2 may be adapted for being screwed onto a break-off bolt and thus comprises an internal thread 8. The head section 4 comprises at least one abutment shoulder 10 extending further towards the radial inward direction than the internal thread 8, the at least one abutment shoulder 10 being arranged adjoining to the predetermined breaking area 6. Therefore, a front face of the break-off bolt may abut the at least one abutment shoulder 10 of the head section 4, resulting in a blockage of rotational movement of the nut 1 relative to the break-off bolt in a winding direction for screwing the nut 1, particularly the thread section 2 further down the bolt along the longitudinal axis L.

The head section 4 may preferably be solid, increasing the stability of the head section 4. Tampering with the head section 4, particularly the at least one abutment shoulder 10, may be prevented. The head section 4 may thus form a cap 12 of the nut 1.

The head section 4 may comprise a screw drive, so that the head section 4 may be engaged by a tool, such as a wrench. In this exemplary embodiment, the head section 4 comprises the shape of a hexagon with a width 14. Preferably, the head section 4 and the thread section 2 may comprise the same outer shape with the same width 14, so that neither constricts the other from being engaged by a tool and/or may be engaged simultaneously by the same tool.

However, the head section 4 may also comprise a different outer shape than the thread section 2. For example, the head section 4 may be formed as a cap 12 that is adapted to be mounted onto a remaining part of the bolt after breaking. The cap 12 may be adapted to be inserted into a depression of the connector, so that the cap 12 does not protrude beyond an outer circumference of the connector. Preferably, the cap 12 may be adapted to be flush with an outer surface of the connector.

The head section 4 may preferably not comprise a cavity and/or an internal thread, so that the head section 4 may easily be removed from the bolt after the nut 1 is broken at the predetermined breaking area 6. The head section 4 does not receive a part of the bolt and may thus simply fall off the bolt or be picked up without having to unwind the head section 4.

The thread section 2 extends along the longitudinal axis L from the predetermined breaking area 6 in a direction away from the head section 4 to a free end 16 of the nut 1. The thread section 2 may be hollow and the internal thread may preferably be arranged along the entire thread section 2. The free end 16 may abut the connector, and by having the thread extending to the free end 16 it can be ensured that an external thread of the bolt is engaged by the internal thread 8 close to or at the interface between nut 1 and connector. Consequently, after shearing off of the bolt, it can be assured that the remaining part of the bolt does not protrude out of a bore of the connector beyond an outer surface of the connector.

According to the invention, the thread section 2 tapers off towards the free end 16 along the longitudinal axis L for allowing a smooth sitting of the thread section 2 on the connector. The connector may comprise a depression, wherein the free end 16 of the thread section 2 may be complementary formed to the depression, allowing a tight seat of the thread section 2 at the interface between thread section 2 and connector.

The thread section 2 may be adapted to be singly engaged by a standardised tool such as a wrench. Therefore, the thread section may comprise the dimensions of a standardised nut, particularly the outer shape and dimensions of the standardised nut. By only engaging the thread section 2 with the installation tool, the thread section 2 may be continuously screwed onto the bolt before and after breaking of the nut 1 at the predetermined breaking area 6. Consequently, the installation efficiency may be increased, particularly for an automated installation. The removal of the head section 2 after breaking may be irrelevant for the installation of the bolt.

The head section 4 and the thread section 2 may be rigidly connected by the predetermined breaking area 6. The predetermined breaking area 6 may for example be formed by a constriction 18 on the outer surface of the nut 1. The outer shape may preferably be circumferential at the predetermined breaking area 6, allowing for a clean cleavage between the head section 4 and the thread section 2 after the predetermined torque for installing the bolt is achieved.

The predetermined breaking area 6 may preferably be hollow, wherein the material thickness of the predetermined breaking area 6 may be lower than the material thickness of the thread section 2. In order to further ensure a simple removal of the head section 4 after the breakage of the nut 1 at the predetermined breaking area 6, the predetermined breaking area 6 preferably does not comprise an internal thread. Consequently, the external thread of the bolt at the predetermined breaking area 6 does not support the nut 1. The breaking at the predetermined breaking area 6 can be further smoothened by having one section gradually tapering towards the predetermined breaking area 6 and the other section being transitioning abruptly to the predetermined breaking area 6. In this exemplary embodiment, the head section 4 tapers towards the predetermined breaking area 6 forming a smooth transition and the thread section 6 abruptly transitions into the predetermined breaking area 6 at around a 90° angle. This may further define the cleavage of the nut 1 after exceeding the predetermined torque, so that the material of the predetermined breaking area 6 preferably remains attached to the head section 4. However, depending on the application one may also have an opposite arrangement, wherein the thread section 2 tapers towards the predetermined breaking area 6.

The thread section 2, head section 4 and predetermined breaking area 6 may preferably be formed integrally with one another as a monolithic component 20.

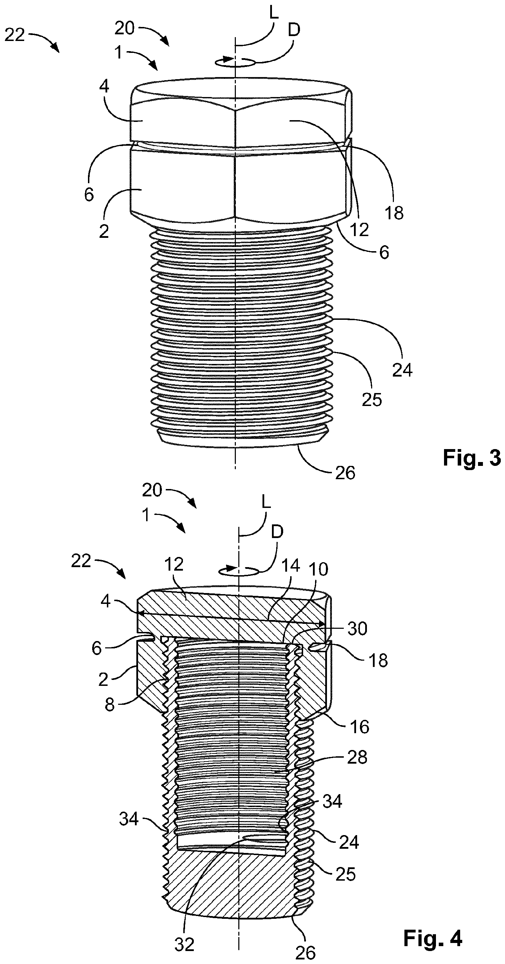

In Figs. 3 and 4 a break-off assembly 22 is shown. The break-off assembly 22 comprises a bolt 24 and the nut 1, which is described above with reference to Figs. 1 and 2.

The bolt 24 extends along the longitudinal axis L and comprises an external thread 25 along the entire length. The bolt 24 may preferably be composed of a sufficiently strong, preferably well conducting material, such as aluminium or an aluminium alloy.

As can be seen in Fig. 3, the bolt 24 does not comprise an intended shearing section, as the distance of the place of shearing along the longitudinal axis L from a free end 26 of the bolt 24 may vary depending on the application. Therefore, the bolt 24 may be flexible and be used for different applications, such as connecting a conductor within a connector with different conductor sizes.

Fig. 4 shows a cut view of the bolt 24 shown in Fig. 3. The bolt 24 may be hollow, comprising a cavity 28 that extends along the longitudinal axis L from the free end 26 of the bolt 24 towards a front face 30 arranged on an opposite end of the bolt 24 and opens towards the front face 30. Consequently, the bolt 24 may be thin-walled, reducing the shearing force necessary to break or shear the bolt 24.

The free end 26 of the bolt 24 may preferably be solid, so that the free end 26 may be adapted to lie flat on the conductor, e.g. a wire or cable, pressing against the conductor with surface pressure. The surface pressure may be distributed along a larger contact area.

The cavity 28 may comprise an internal thread 32 having grooves 34 that further decrease the wall thickness of the bolt 24, further reducing the torque needed for breaking, especially shearing, the bolt 24.

As depicted in the detailed view in Fig. 4, the internal thread 32 may be different to the external thread 25. For example, the internal thread 32 may have a counter helicoid compared to the external thread 25. In other words, the internal thread 32 and the external thread 25 may be staggered, so that the grooves 34 of the internal thread 32 may run parallel to the grooves 34 of the external thread 25, reducing the wall thickness of the bolt 24. The internal thread 32 may allow for a cleaner break at the top of the remaining bolt 24 after it has been broken by the nut 1, particularly the thread section 2, compared to a thin walled, hollow bolt 24 without an internal thread 32. The nut exerts a tensile stress on the bolt 24 causing the breakage of the bolt 24.

The internal thread 8 of the thread section may be adapted to engage the external thread 25 of the bolt 24. The nut 1 can be screwed onto the bolt 24 until the front face 30 of the bolt 24 abuts the at least one abutment shoulder 10 of the head section 4 directly beyond the predetermined breaking area 6 with respect to the thread section 2. The head section 4 thus prevents the nut 1, particularly the thread section 2 to be screwed any further down the bolt 24 in a winding direction D for installing the bolt 24 in a connector. In the position shown in Fig. 3 and 4, the nut 1 may serve as a screw head 36.

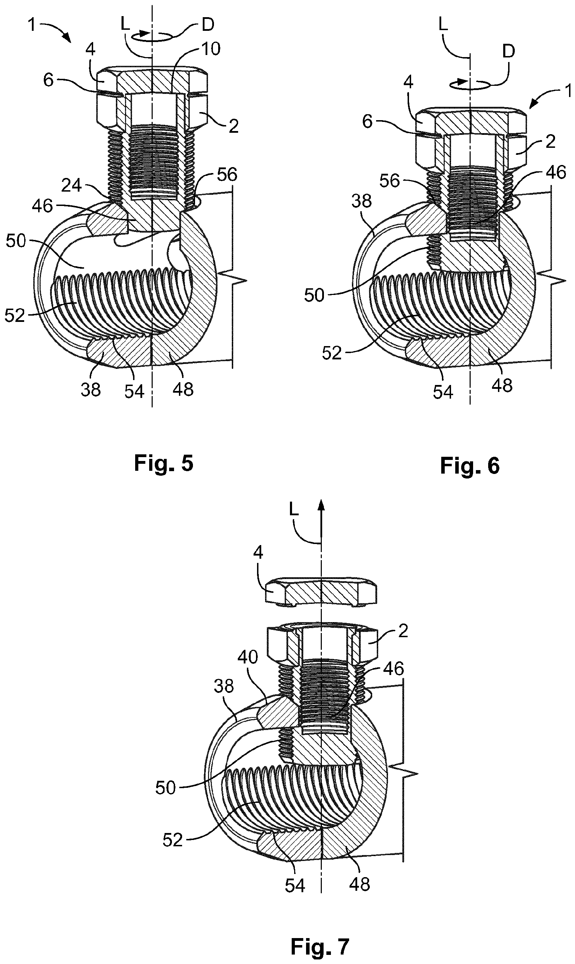

The function of the nut 1 is further explained with reference to Figs. 5 to 11 showing different positions of the nut 1 during installation of the bolt 24 in a connector 38 forming a connector assembly 39.

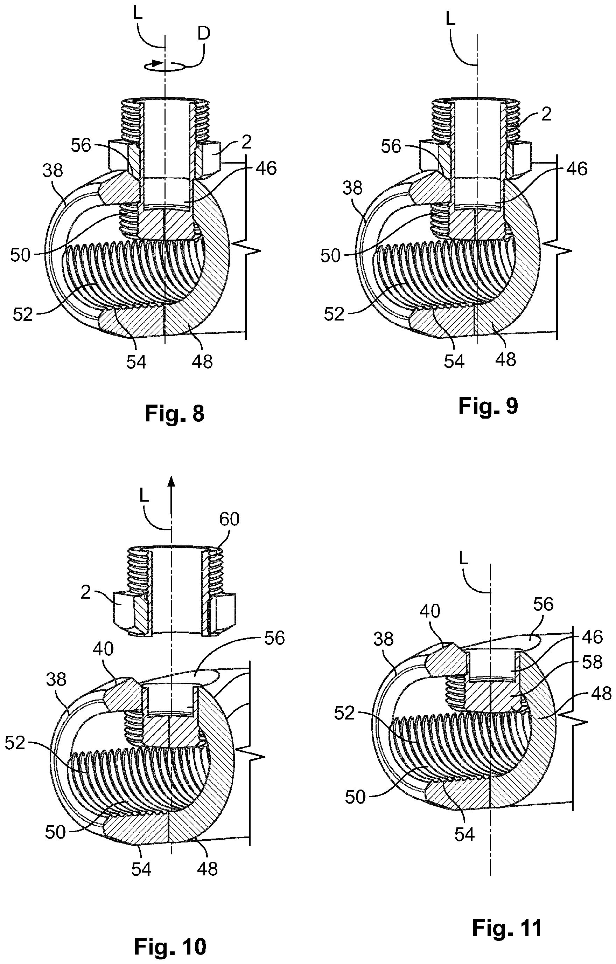

Fig. 5 shows an intact bolt 24 in an initial position, in which the nut 1 is screwed onto the bolt 24 until the bolt 24 abuts the at least one abutment shoulder 10, blocking further movement of the nut 1 relative to the bolt 24 in the winding direction D and coupling the nut 1 and the bolt 24 in a rotationally rigid manner in said winding direction D. Therefore, the torque applied to the nut 1 is directly transferred to the bolt 24, screwing the bolt 24 into a bore 46 of the connector 38 (Fig. 6). Once the predetermined torque, preferably the required installation torque of the bolt 24, is surpassed, the nut 1 may break at the predetermined breaking area 6, separating the head section 4 and the thread section 2 from one another. Consequently, the thread section 2 may be rotationally decoupled from the bolt 24 and may travel down the bolt 24, as shown in Figs. 7 and 8. The free end 26 of the bolt 24 presses against a conductor 52 that is arranged in a hollow space 50 of the connector 38, so that the conductor 52 is clamped between the bolt 24 and an inner surface 54 of the connector's wall 48.

The thread section 2 may travel down until abutment with an outer surface 40 of the connector 38 (Figs. 8 and 9). The bore 46 may open into at least one depression 56 formed on the outer surface 40 of the connector 38. The depression 56 may be adapted to at least partially receive the thread section 1. Therefore, the free end 16 of the thread section 2 can evenly abut the connector 38 at the entrance of the bore 46, allowing for a clean cut of the bolt 24. By further inducing a torque on the thread section 2, the torque is transmitted to the bolt 24, subjecting the bolt to tensile stress that leads to the breakage, especially shearing of the bolt 24 at the interface of the thread section 2 and the connector 38. The bolt 24 may be split into a remaining part 58, arranged in the bore 46 and protruding into the hollow space 50 pressing against the conductor 52, and into a removable part 60 that can be discarded (Figs. 10 and 11). The thread section 2 may be arranged on the removable part 60 and can also be discarded. The remaining part 58 may preferably not protrude out of the bore 46 towards the outer surface 40 of the connector 38. For reducing the risk of pulling the remaining part 58 out of the bore during shearing, the torque required to break, especially shear, the bolt 24 may be lower than the predetermined torque.

Therefore, with the nut 1 an easy and stable connection can be made. The installation can be completed in a single installation step, wherein a torque is applied to the thread section 1 until the bolt 24 is broken, while ensuring that the bolt 24 is installed with a predetermined torque. During installation no severed parts have to be removed before the thread section 2 can be further screwed down the bolt 24, which may be the case by having different torque-limiting features. Consequently, the installation efficiency can be greatly enhanced and, for example, can easily be performed automatically.

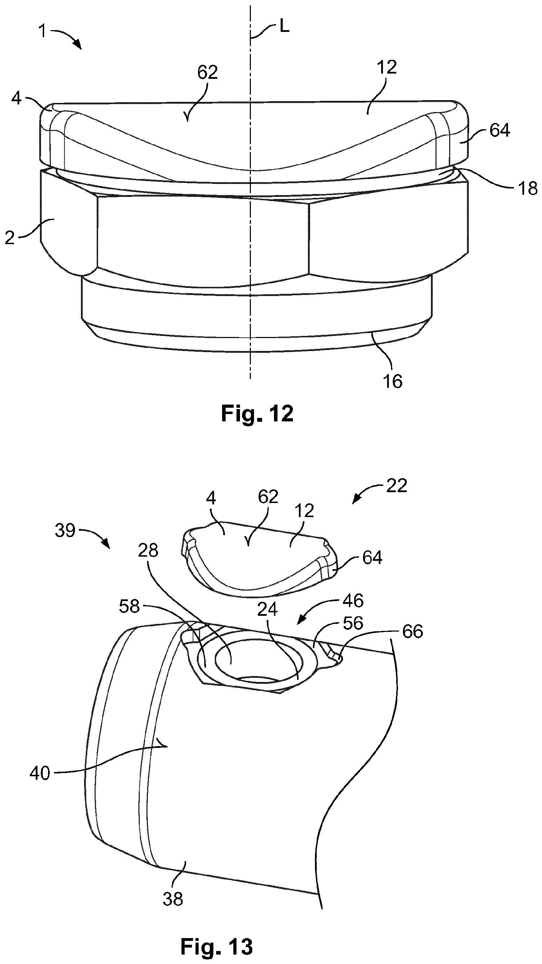

A further advantageous embodiment of the inventive nut 1 is shown in Fig. 12. In this embodiment, the head section 4 is formed having a curved surface 62 and may comprise at least one, in this case two guiding protrusions 64 protruding radially from the remaining head section 4. The two guiding protrusions 64 may be arranged diametrically to one another at the remaining head section. The remaining head section 4 may particularly have a circumferential shape wherein the material thickness gradually increases from one side edge of the head section towards the middle and similarly decreases from the middle towards the opposing side edge, creating the curved surface. The guiding protrusions 64 may be formed at a circumferential position of the remaining head section 4 with the maximal material thickness.

After breakage of the head section 4 from the thread section 2, the head section 4 may be kept and used as a cap 12. The cap 12 may be inserted into the depression 56 of the connector 38 after breakage of the bolt 24 (see Fig. 13). Thus, the cap 12 may close off the remaining part of the bolt 58. The depression 56 may comprise guiding notches 66 complementary to the guiding protrusions 64 of the head section 4. Preferably, the cap 12 may be fittingly received in the depression 56 so that the curved surface 62 is flush with the outer surface 40 of the connector 38. The curved surface 62 may preferably complement, particularly complete the outer surface 40 of the connector 38, so that the depression 56 is completely filled with the cap 12.

### REFERENCE NUMERALS

- 1: torque-limiting nut
- 2: thread section
- 4: head section
- 6: breaking area
- 8: internal thread
- 10: abutment shoulder
- 12: cap
- 14: width of head section
- 16: free end of the nut
- 18: constriction
- 20: monolithic component
- 22: break-off assembly
- 24: break-off bolt
- 25: external thread
- 26: free end of the bolt
- 28: cavity
- 30: front face
- 32: internal thread
- 34: groove
- 36: screw head
- 38: connector
- 39: connector assembly
- 40: outer surface
- 46: bore
- 48: wall
- 50: hollow space
- 52: conductor
- 54: inner surface
- 56: depression
- 58: remaining part of the bolt
- 60: removable part
- 62: curved surface
- 64: guiding protrusion
- 66: guiding notch

- D: winding direction
- L: longitudinal axis

## Claims

1. Torque-limiting nut (1) for a break-off bolt (24), especially for an electric connector (38), the torque-limiting nut (1) comprising a thread section (2) and a head section (4) which are separated by a predetermined breaking area (6), wherein the thread section (2) comprises an internal thread (8) and the head section (4) comprises at least one abutment shoulder (10) extending further towards the radial inward direction than the internal thread (8), the at least one abutment shoulder (10) being arranged adjoining to the predetermined breaking area (6), **characterized in that** the thread section tapers off towards a free end (16).

2. Torque-limiting nut (1) according to claim 1, wherein the head section (4) is solid.

3. Torque-limiting nut (1) according to claim 1 or 2, wherein the predetermined breaking area (6) is hollow and has a lower material thickness than the thread section (2).

4. Torque-limiting nut (1) according to any one of claims 1 to 3, wherein the head section (4) does not comprise an internal thread (8).

5. Torque-limiting nut (1) according to any one of claims 1 to 4, wherein the predetermined breaking area (6) does not comprise an internal thread (8).

6. Torque-limiting nut (1) according to any one of claims 1 to 5, wherein the internal thread (8) of the thread section (2) extends from the predetermined breaking area (6) away from the head section (4) to the free end (16) of the torque-limiting nut (1).

7. Torque-limiting nut (1) according to any one of claims 1 to 6, wherein the head section (4) comprises a fixing mechanism for fixing the head section (4) to the break-off bolt (24).

8. Torque-limiting nut (1) according to any one of claims 1 to 7, wherein the head section (4), predetermined breaking area (6) and the thread section (2) are formed integrally with one another as a monolithic component (20).

9. Break-off assembly (22) for installing a conductor (52) within a connector (38), the assembly (22) comprising a break-off bolt (24) and a torque-limiting nut (1) according to any one of claims 1 to 8.

10. Break-off assembly (22) according to claim 9, wherein the at least one abutment shoulder (10) abuts a front face (30) of the break-off bolt (24).

11. Break-off assembly (22) according to claim 9 or 10, wherein the torque for breaking the torque-limiting nut (1) at the predetermined breaking area (6) is higher than the torque for breaking the break-off bolt (24).

12. Break-off assembly (22) according to any one of claims 9 to 11, wherein the break-off bolt (24) does not comprise a predetermined breaking area (6).

13. Break-off assembly (22) according to any one of claims 9 to 12, wherein the break-off bolt (24) comprises a cavity (28) opened towards the front face (30) of the break-off bolt (24), the cavity (28) being closed off by the head section (4).

14. Break-off assembly (22) according to claim 13, wherein the cavity (28) of a remaining part of the break-off bolt (58), which remains in the connector (38) after breakage of the break-off bolt (58) is closed off by the head section (4).

15. Connector assembly (39) comprising a connector (38) having a hollow space (50) and at least one bore (46) extending from an outer surface of the connector (38) to the hollow space (50) and at least one break-off assembly (22) according to any one of claims 9 to 14, wherein the at least one bore (46) is closed off by the head section (4).

## Patentansprüche

1. Drehmomentbegrenzende Mutter (1) für eine Abreißschraube (24), insbesondere für einen elektrischen Verbinder (38), wobei die drehmomentbegrenzende Mutter (1) einen Gewindeabschnitt (2) sowie einen Kopfabschnitt (4) umfasst, die durch eine Sollbruchstelle (6) voneinander getrennt sind, der Gewindeabschnitt (2) ein Innengewinde (8) umfasst, der Kopfabschnitt (4) wenigstens eine Anliege-Schulter (10) umfasst, die sich weiter radial nach innen erstreckt als das Innengewinde (8), und die wenigstens eine Anliege-Schulter (10) an die Sollbruchstelle (6) angrenzend angeordnet ist, **dadurch gekennzeichnet, dass** sich der Gewindeabschnitt zu einem freien Ende (16) hin verjüngt.

2. Drehmomentbegrenzende Mutter (1) nach Anspruch 1, wobei der Kopfabschnitt (4) massiv ist.

3. Drehmomentbegrenzende Mutter (1) nach Anspruch 1 oder 2, wobei die Sollbruchstelle (6) hohl ist und eine geringere Materialstärke hat als der Gewindeabschnitt (2).

4. Drehmomentbegrenzende Mutter (1) nach einem der Ansprüche 1 bis 3, wobei der Kopfabschnitt (4) kein Innengewinde (8) umfasst.

5. Drehmomentbegrenzende Mutter (1) nach einem der Ansprüche 1 bis 4, wobei die Sollbruchstelle (6) kein Innengewinde (8) umfasst.

6. Drehmomentbegrenzende Mutter (1) nach einem der Ansprüche 1 bis 5, wobei das Innengewinde (8) des Gewindeabschnitts (2) sich von der Sollbruchstelle (6) weg von dem Kopfabschnitt (4) bis zu dem freien Ende (16) der drehmomentbegrenzenden Mutter (1) erstreckt.

7. Drehmomentbegrenzende Mutter (1) nach einem der Ansprüche 1 bis 6, wobei der Kopfabschnitt (4) einen Befestigungsmechanismus zum Befestigen des Kopfabschnitts (4) an der Abreißschraube (24) umfasst.

8. Drehmomentbegrenzende Mutter (1) nach einem der Ansprüche 1 bis 7,wobei der Kopfabschnitt (4), die Sollbruchstelle (6) und der Gewindeabschnitt (2) integral miteinander als eine monolithische Komponente (20) ausgebildet sind.

9. Abreißanordnung (22) zum Installieren eines Leiters (52) im Inneren eines Verbinders (38), wobei die Anordnung (22) eine Abreißschraube (24) sowie eine drehmomentbegrenzende Mutter (1) nach einem der Ansprüche 1 bis 8 umfasst.

10. Abreißanordnung (22) nach Anspruch 9, wobei die wenigstens eine Anliege-Schulter (10) an einer Vorderfläche (30) der Abreißschraube (24) anliegt.

11. Abreißanordnung (22) nach Anspruch 9 oder 10, wobei das Drehmoment zum Abreißen der drehmomentbegrenzenden Mutter (1) an der Sollbruchstelle (6) stärker ist als das Drehmoment zum Abreißen der Abreißschraube (24).

12. Abreißanordnung (22) nach einem der Ansprüche 9 bis 11, wobei die Abreißschraube (1) keine Sollbruchstelle (6) umfasst.

13. Abreißanordnung (22) nach einem der Ansprüche 9 bis 12, wobei die Abreißschraube (24) einen Hohlraum (28) umfasst, der zu der Vorderfläche (30) der Abreißschraube (24) hin offen ist, und der Hohlraum (28) durch den Kopfabschnitt (4) abgeschlossen wird.

14. Abreißanordnung (22) nach Anspruch 13, wobei der Hohlraum (28) eines verbleibenden Teils der Abreißschraube (58), der in dem Verbinder (38) nach Abreißen der Abreißschraube (58) verbleibt, durch den Kopfabschnitt (4) abgeschlossen wird.

15. Verbinderanordnung (39), die einen Verbinder (38) mit einem hohlen Raum (50) und wenigstens einer Bohrung (46), die sich von einer Außenfläche des Verbinders (38) zu dem holen Raum (50) erstreckt, sowie wenigstens eine Abreißanordnung (22) nach einem der Ansprüche 9 bis 14 umfasst, wobei die wenigstens eine Bohrung (46) durch den Kopfabschnitt (4) abgeschlossen wird.

## Revendications

1. Ecrou de limitation de couple (1) pour boulon à coupure (24), notamment pour connecteur électrique (38), l'écrou de limitation de couple (1) comprenant une section filetée (2) et une section de tête (4) qui sont séparées par une zone de coupure prédéterminée (6), dans lequel la partie filetée (2) comprend un filetage intérieur (8) et la partie tête (4) comprend au moins un épaulement de butée (10) s'étendant plus loin vers la direction radiale intérieure que le filetage intérieur (8), ledit au moins un épaulement de butée (10) étant disposé à côté de la zone de coupure prédéterminée (6), **caractérisé en ce que** la partie filetée se rétrécit vers une extrémité libre (16).

2. Ecrou de limitation de couple (1) selon la revendication 1, dans lequel la section de tête (4) est solide.

3. Ecrou de limitation de couple (1) selon les revendications 1 ou 2, dans lequel la zone de coupure prédéterminée (6) est creuse et présente une épaisseur de matériau inférieure à celle de la section filetée (2).

4. Ecrou de limitation de couple (1) selon l'une quelconque des revendications 1 à 3, dans lequel la section de tête (4) ne comprend pas de filetage intérieur (8).

5. Ecrou de limitation de couple (1) selon l'une quelconque des revendications 1 à 4, dans lequel la zone de coupure prédéterminée (6) ne comprend pas de filetage intérieur (8).

6. Ecrou de limitation de couple (1) selon l'une quelconque des revendications 1 à 5, dans lequel le filetage intérieur (8) de la section filetée (2) s'étend de la zone de coupure prédéterminée (6) à l'écart de la section de tête (4) jusqu'à l'extrémité libre (16) de l'écrou de limitation de couple (1).

7. Ecrou de limitation de couple (1) selon l'une quelconque des revendications 1 à 6, dans lequel la section de tête (4) comprend un mécanisme de fixation pour fixer la section de tête (4) au boulon de coupure (24).

8. Ecrou de limitation de couple (1) selon l'une quelconque des revendications 1 à 7, dans lequel la section de tête (4), la zone de coupure prédéterminée (6) et la section de filetage (2) sont formées intégralement l'une avec l'autre en tant que composant monolithique (20).

9. Ensemble de coupure (22) pour l'installation d'un conducteur (52) dans un connecteur (38), l'ensemble (22) comprenant un boulon de coupure (24) et un écrou de limitation de couple (1) selon l'une quelconque des revendications 1 à 8.

10. Ensemble de coupure (22) selon la revendication 9, dans lequel ledit au moins un épaulement de butée (10) est en contact avec une face avant (30) du boulon de coupure (24).

11. Ensemble de coupure (22) selon les revendications 9 ou 10, dans lequel le couple de coupure de l'écrou à couple limité (1) au niveau de la zone de coupure prédéterminée (6) est supérieur au couple de coupure du boulon de coupure (24).

12. Ensemble de coupure (22) selon l'une quelconque des revendications 9 à 11, dans lequel le boulon de coupure (24) ne comporte pas de zone de coupure prédéterminée (6).

13. Ensemble de coupure (22) selon l'une quelconque des revendications 9 à 12, dans lequel le boulon de coupure (24) comprend une cavité (28) ouverte vers la face avant (30) du boulon de coupure (24), la cavité (28) étant fermée par la section de tête (4).

14. Ensemble de coupure (22) selon la revendication 13, dans lequel la cavité (28) d'une partie restante du boulon de coupure (58), qui demeure dans le connecteur (38) après la coupure du boulon de coupure (58), est fermée par la section de tête (4).

15. Ensemble de connecteur (39) comprenant un connecteur (38) ayant un espace creux (50) et au moins un alésage (46) s'étendant d'une surface extérieure du connecteur (38) à l'espace creux (50) et au moins un ensemble de coupure (22) selon l'une quelconque des revendications 9 à 14, dans lequel ledit au moins un alésage (46) est obturé par la section de tête (4).
